# EUROPEAN PATENT SPECIFICATION

(11) **EP 1 918 618 B1**
(45) Date of publication and mention of the grant of the patent: **12.01.2011**
(21) Application number: 07119880.8
(22) Date of filing: 02.11.2007
(51) Int. Cl.: F16J 15/32

(54) **Mechanical sealing system and method for rotary machines**
Mechanisches Abdichtungssystem und Verfahren für Rotationsmaschinen
Système d'étanchéité mécanique et procédé pour des machines rotatives

(30) Priority: 03.11.2006 US 556294
(43) Date of publication of application: 07.05.2008
(73) Proprietor: GENERAL ELECTRIC COMPANY, Schenectady, NY 12345 (US)
(72) Inventor: Schmitz, Michael Bernard, 85354 Freising (DE); Lusted, Roderick Mark, Niskayuna, NY 12309 (US); Salehi, Mohsen, Ranch Palos Verdes, CA 90275 (US); Ruggiero, Eric John, Rensselaer, NY 12144 (US); Baldassarre, Leonardo, 50019 Sesto Fiorentino (IT)
(74) Representative: Bedford, Grant Richard

(56) References cited:
- JP-A- 62 261 764
- US-A- 4 424 975
- US-A- 4 434 987
- US-A- 4 447 063
- US-A- 4 643 437

## Description

The invention relates generally to a rotary machine and, more particularly, to a sealing system for an interface between rotating and stationary components. In certain aspects, the sealing system includes a mechanical sealing system between a rotary shaft and a surrounding structure of turbo-compressors.

Performance and efficiency of rotary machines, e.g., turbo-compressors, are dependent on a clearance gap between rotating and stationary components within the turbine engine. For example, the clearance gap between the rotary shaft and the surrounding stationary housing provides a narrow flow passage, resulting in process fluid flow leakage that can reduce the rotary machine performance. As the gap between the rotating and the stationary components increases, the leakage flow increases and the efficiency of the machine decreases.

Dry gas seals are used in rotary machines such as turbo-compressors to seal leakage of a process gas between the rotating and stationary components. Dry gas seals are basically mechanical face seals, consisting of a mating (rotating) and a primary (stationary) ring. During operation, grooves in the rotating ring generate a fluid-dynamic force causing the stationary ring to separate from the rotating ring creating a "running gap" between the two rings. A sealing gas flows via the gap between the rotating and stationary rings. However, during stand-still and lower operating speeds of the rotary machines, flow of sealing gas via the gap between the rotating and stationary rings is reduced. The rotating and stationary rings mutually contact each other and cause mechanical friction, wear, and overheating.

In certain examples, actuator devices such as auxiliary pumps may be used to supply pressure to open the gap between the rotating and stationary rings and therefore avoid contact during stand-still and lower speed operating conditions. Flow of less sealing gas via the gap between the rotating and stationary rings causes over heating of the mechanical parts of the seal which eventually results in seal damage. Flow of excess sealing gas via the gap between the rotating and stationary rings results in high seal gas consumption and reduction in efficiency of the machine.

JP 62261764 describes a shaft seal device in which the starting torque of the equipment is reduced by providing a spring of a shape memory alloy to vary the pressure between rotary and fixed rings

US4643437 and US4447063 describe shaft seal devices with active gap control mechanism.

Accordingly, there is a need for a system and method for maintaining minimum contact force between rotating and stationary parts of a scaling system during transitional operating conditions of the rotary machine.

According to a first aspect of the invention, there is provided a rotary machine, comprising a machine rotor; a machine stator; and a fluid seal disposed between the machine rotor and the machine stator; comprising a fluid seal stator comprising a stator member configured to move axially within a fluid seal housing, a fluid seal rotor, a spring biasing the stator member against the fluid seal rotor and an active gap control mechanism coupled to the fluid seal stator, and configured to control a gap between the fluid seal stator and the fluid seal rotor in which the active gap control mechanism comprises one or more shape memory alloy devices coupled to the fluid seal housing and configured to bias the stator member away from the fluid seal rotor upon supply of current to the shape memory alloy device and when electric power is removed, the stator member moves towards the rotor member due to the spring force.

According to a second aspect of the invention, there is provided a method of operating a rotary machine comprising a machine rotor; a machine stator; and a fluid seal disposed between the machine rotor and the machine stator and comprising a fluid seal stator and a fluid seal rotor, the method comprising actively controlling a flow of a sealing fluid via a gap between the fluid seal stator and the fluid seal rotor in which actively controlling comprises actuating a shape memory alloy device to bias the fluid seal stator away from the fluid seal rotor upon supply of current to the shape memory during lower operating speeds of the rotary machine.

Various features, aspects, and advantages of the present invention will become better understood when the following detailed description is read with reference to the accompanying drawings in which like characters represent like parts throughout the drawings, wherein:
FIG. 1 is a partial perspective view of rotary machine, which for purposes of example is illustrated as a turbo-compressor, having a fluid seal in accordance with an exemplary embodiment of the present invention; and
FIG. 2 is a diagrammatical view of a fluid seal having an electromechanical type active gap control mechanism in accordance with an exemplary embodiment of the present invention.

As discussed in detail below, the present invention provides a rotary machine, in which a fluid seal is disposed between a machine rotor and a machine stator. The exemplary fluid seal includes a fluid seal stator, a fluid seal rotor, and an active gap control mechanism coupled to the fluid seal stator. The exemplary fluid seal is configured to control the flow of a sealing fluid via a gap between the fluid seal stator and the fluid seal rotor. In one exemplary embodiment, the active gap control mechanism includes an electro-mechanical devices coupled to the fluid seal stator. The electromechanical device is a shape memory alloy device, coupled to the fluid seal stator. The active gap control mechanism in accordance with the exemplary embodiments of the present invention prevents mutual contact and facilitates maintenance of a gap between fluid seal stator and the fluid seal rotor during all operating conditions of the rotary machine.

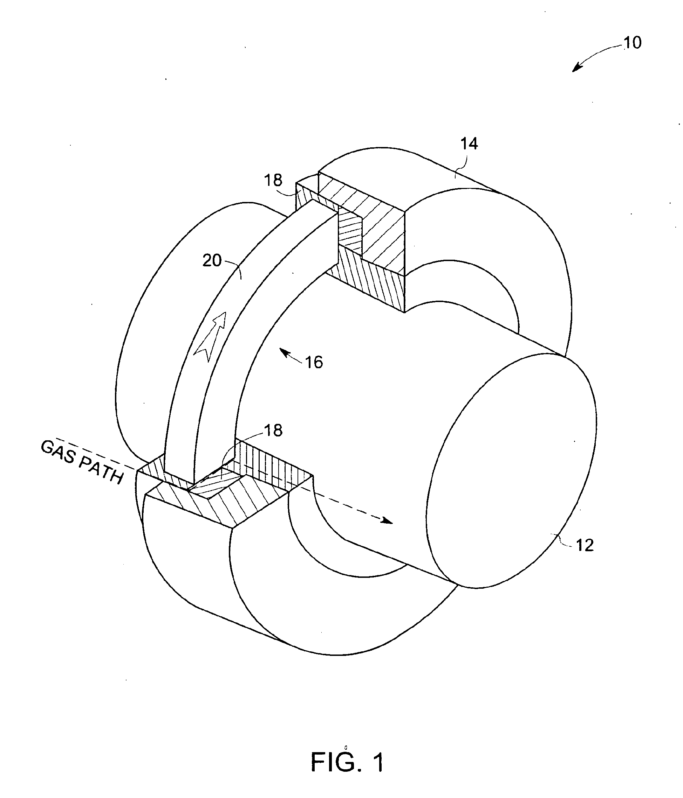

Referring to FIG. 1, an exemplary rotary machine (such as a turbo-compressor) 10 is illustrated in accordance with an exemplary embodiment of the present invention. The machine 10 includes a machine rotor 12 (such as a compressor shaft) disposed inside a machine stator 14 (sometimes referred to as a "housing"). A fluid seal 16 is disposed between the machine rotor 12 and the machine stator 14 and configured to reduce leakage of a fluid between the machine rotor 12 and the machine stator 14. In one embodiment, the fluid seal comprises a dry gas seal configured to reduce leakage of a process gas. For ease of illustration, many examples herein reference a dry gas seal, however, the principles are applicable to liquid seals more generally. The process gas may include gases such as carbon dioxide, hydrogen sulfide, butane, methane, ethane, propane, liquefied natural gas, or a combination thereof. In certain embodiments, two or more dry gas seals 16 may be used, one at each end of the machine rotor 14. In certain other embodiments, a single dry gas seal 16 located directly adjacent to an impeller (not shown) may be used. The dry gas seal 16 includes a mating fluid seal stator 18 (non-rotatable ring) and a fluid seal rotor 20 (rotatable ring). During operation of the machine, grooves (not shown) in the fluid seal stator 18 and the fluid seal rotor 20 generate a fluid-dynamic force causing the fluid seal stator 18 to separate from the fluid seal rotor 20 creating a "running gap" between the fluid seal stator 18 and the fluid seal rotor 20. It should be noted herein that the illustrated turbo-compressor is merely an exemplary embodiment, and the dry gas seal in accordance with the embodiment of the present invention may also be applicable to other rotary machines requiring sealing arrangements to prevent leakage of sealing gas. The details and operation of the dry gas seal 16 is explained in greater detail with respect to subsequent figures.

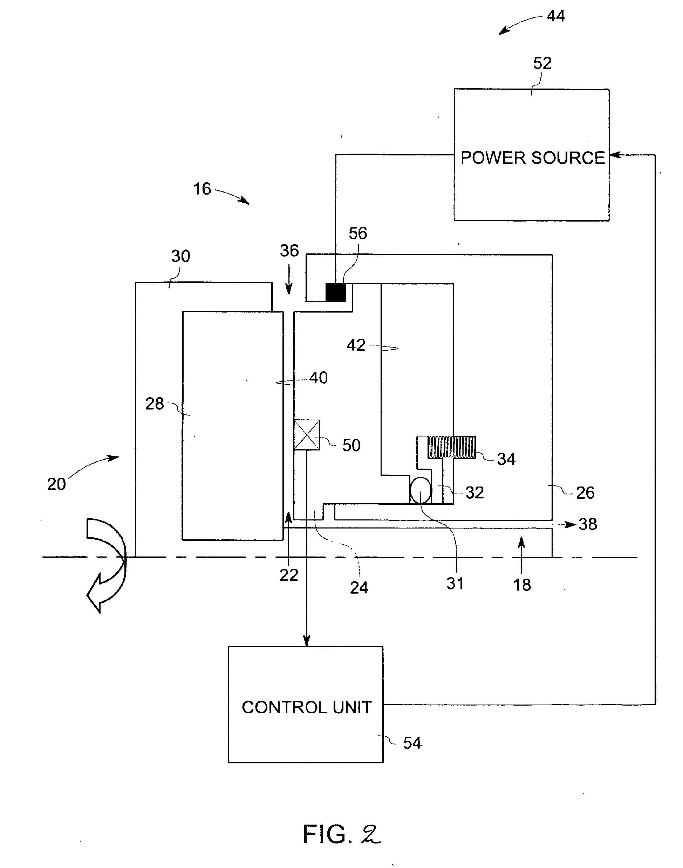

Referring to FIG. 2, a detailed view of the dry gas seal 16 in accordance with certain exemplary embodiments of the present invention is illustrated. As discussed above, the dry gas seal 16 includes the fluid seal stator 18, the fluid seal rotor 20, and a gap 22 between the fluid seal stator 18 and the fluid seal rotor 20. The gap 22 may be of the order of a few micrometers for example. The fluid seal stator 18 includes a stator member 24 disposed inside a fluid seal housing 26. The fluid seal rotor 20 includes a rotor member 28 disposed inside a rotor housing 30. The stator member 24 is axially movable within the fluid seal housing 26. A mechanical seal 31 (O-ring seal) is provided on a seat 32 located between the rotor member 28 and the rotor housing 30. The seat 32 is coupled via a spring 34 to the fluid seal housing 26. The spring 34 biases the stator member 24 against the rotor member 28 during non-operating conditions of the machine.

During operation conditions of the dry gas seal 16, a sealing gas (inert gas, e.g. nitrogen) enters a flow inlet path 36, flows via the gap 22 between the fluid seal stator 18 and the fluid seal rotor 20 and exits via a flow exit path 38. The flow of the sealing gas generates an opening force to move the stator member 24 axially within the fluid seal housing 26 and maintain the gap 22 between the fluid seal stator 18 and the fluid seal rotor 20. A secondary leakage of the sealing gas may occur between the stator member 24 and the fluid seal housing 26. The mechanical seal 31 is provided to reduce the secondary leakage of sealing gas between the stator member 24 and the fluid seal housing 26.

During normal operating conditions of the machine (i.e., wherein the machine is operating at nominal speeds and under nominal values of supply pressure of the sealing gas) a constant gap 22 is maintained between the fluid seal stator 18 and the fluid seal rotor 20. The constant gap 22 is maintained due to a force equilibrium between the opening force exerted on one side 40 of the stator member 24 due to the sealing gas pressure and the spring force exerted on another side 42 of the stator member 24 by the spring 34. During lower operating speeds of the machine, the spring force acting on the side 42 of the stator member 24 becomes greater than the opening force exerted on the side 40. As a result, the stator member 24 contacts the rotor member 28 resulting in mechanical friction, overheating and wear of the components. If less sealing gas flows via the gap 22, the mutually contacting components overheat. If excess sealing gas flows via the gap 22, consumption of sealing gas increases. In the illustrated embodiment, an active gap control mechanism 44 is coupled to the fluid seal stator 18 to facilitate maintenance of gap 22 between the fluid seal rotor 20 and the fluid seal stator 18 during all operating conditions of the machine.

In the illustrated embodiment, the active gap control mechanism 44 is an electromechanical device 56 coupled to the fluid seal stator 18. In one embodiment the mechanism 44 further includes a micro electromechanical sensor 50 configured to detect the distance between the rotor member 28 and the stator member 24. In some embodiments, sensor 50 comprises a plurality of sensors. In the embodiment of Fig. 2, the electromechanical sensor 50 is attached to the fluid seal stator 18. A power source 52 is coupled to the electromechanical device 56 and configured to supply electric power to the electromechanical device 56. A control unit 54 is configured to actuate the power source 52 based on an output signal from the micro electromechanical sensor 50. In other words, the control unit 54 actuates the power source 52 to control the amount of current or voltage in the electromechanical device 56 to control the gap between the fluid seal stator 18 and the fluid seal rotor 20.

In one example, when the distance between the stator member 24 and the rotor member 28 is less than a first threshold limit, the control unit 54 activates the power source 52 to supply electric power to the electromechanical device 56. As a result, the stator member 24 is biased away from the rotor member 28 and the gap 22 is maintained between the fluid seal stator 18 and the fluid seal rotor 20. When the distance between the stator member 24 and the rotor member 28 is greater than a second threshold limit (which may be the same or different from the first threshold limit), the control unit 54 deactivates the power source 52 to remove electric power from the electromechanical device 56. As a result, the stator member 24 is moved towards the rotor member 28 and the gap 22 between the fluid seal stator 18 and the fluid seal rotor 20 is reduced. The gap 22 is actively controlled i.e. increased or reduced to control the leakage of sealing gas. The gap 22 may be increased to enhance cooling of the components or reduced to prevent leakage of sealing gas depending on the requirements of the machine.

In certain embodiments, the control unit 54 may further include a database and an algorithm implemented as a computer program executed by the control unit computer or processor. The database may be configured to store predefined information about the rotary machine and the dry gas seal. For example, the database may store information relating to type of the machine, machine speed, load, type of dry gas seal, type of sealing gas, supply pressure of sealing gas, amount of sealing gas required, gap between the fluid seal rotor and the fluid seal stator, cooling requirement, type of power source, or the like. The database may also include instruction sets, maps, lookup tables, variables, or the like. Such maps, lookup tables, and instruction sets, are operative to correlate characteristics of the rotary machine to control the gap between the fluid seal stator and the fluid seal rotor. The database may also be configured to store actual sensed/detected information pertaining to the rotary machine and the dry gas seal. The algorithm may facilitate the processing of sensed information pertaining to the rotary machine and the dry gas seal. Any of the above mentioned parameters may be selectively and/or dynamically adapted or altered relative to time. For example, the gap between fluid seal rotor and the fluid seal stator may be altered depending on the speed or load of the machine. In another example, the gap may be altered depending on the cooling requirement. In yet another example, the gap may be altered depending on the sealing gas consumption. Similarly, any number of examples may be envisaged.

In FIG 2, the electromechanical device 56 is illustrated as being coupled to the fluid seal housing 26. In an alternative embodiment, the electromechanical device 56 is coupled to stator member 24. Although one electromechanical device 56 is illustrated, a plurality of devices 56 may be used in other exemplary embodiments. The control unit 54 actuates the power source 52 to control the amount of current or voltage in the electromechanical device 56 to control the gap between the fluid seal stator 18 and the fluid seal rotor 20. As discussed above, the control unit 54 selectively activates the power source 52 to supply electric power to the electromechanical device 56 and bias the stator member 24 away from the rotor member 28 and the gap 22 is maintained between the fluid seal stator 18 and the fluid seal rotor 20 is increased. The control unit 54 selectively deactivates the power source 52 to remove electric power from the electromechanical device 56 and move the stator member 24 towards the rotor member 28. In certain other exemplary embodiment, the control unit 54 and the micro electromechanical sensor 50 may not be required to actuate the gap control mechanism 44.

The electromechanical device 56 is a shape memory alloy device. In certain embodiments, the shape memory alloy device includes a plurality of wires that produce movement when an electric current is passed through the wires. The wires may include alloys of copper, nickel, aluminum, or copper, zinc, aluminum, or iron, silicon, manganese, or nickel, titanium, and carbon (nitinol). When the wires are cooled below a transition temperature, the wires are converted to martensite phase and are deformable. When the wires are heated above the transition temperature, the wires are converted to austenite phase resulting in restoration of the original shape of the wires. In certain exemplary embodiments, a plurality of shape memory alloy devices may be used.

When an electric power is supplied to the mechanism 44, the shape memory alloy device actuates the stator member 24 in such a way so as to move stator member 24 away from the rotor member 28. As a result, the gap 22 between the fluid seal stator 18 and the fluid seal rotor 20 is increased and the mechanical contact between the stator 18 and the rotor 20 is avoided. The control unit 54 actuates the power source 52 to control the amount of current and subsequently temperature in the shape memory alloy device to control the gap between the fluid seal stator 18 and the fluid seal rotor 20. The active gap control mechanism in accordance with the exemplary embodiments of the present invention prevents mutual contact and facilitates maintenance of a gap between the fluid seal stator and the fluid seal rotor during all operating conditions of the rotary machine.

While only certain features of the invention have been illustrated and described herein, many modifications and changes will occur to those skilled in the art which fall within the scope of the appended claims.

## Claims

1. A rotary machine (10), comprising:
a machine rotor (12);
a machine stator (14); and
a fluid seal (16) disposed between the machine rotor (12) and the machine stator (14); comprising:
a fluid seal stator (18) comprising a stator member (24) configured to move axially within a fluid seal housing (26),
a fluid seal rotor (20), comprising a rotor member (28) disposed inside a rotor housing (30),
a spring (34) biasing the stator member (24) against the fluid seal rotor (28) and
an active gap control mechanism (44) coupled to the fluid seal stator (18), and configured to control a gap (22) between the fluid seal stator (18) and the fluid seal rotor (20) **characterized in that**
the active gap control mechanism (44) comprises one or more shape memory alloy devices (56) coupled to the fluid seal housing (26) and configured to bias the stator member (24) away from the fluid seal rotor (20) upon supply of current to the shape memory alloy device (56) and
when electric power is removed, the stator member (24) moves towards the rotor member (28) due to the spring force.

2. The rotary machine (10) of claim 1, further comprising a control unit (54) for controlling the amount of current applied to the shape memory alloy device(s) (56) in order control the gap (22) between the stator member (24) and the fluid seal rotor (20).

3. The rotary machine (10) of claim 2 wherein the active gap control mechanism (44) comprises at least one micro electromechanical sensor (50) configured to detect a distance between the fluid seal rotor (20) and the fluid seal stator (18).

4. A method of operating a rotary machine (10) comprising a machine rotor (12); a machine stator (14); and a fluid seal (16) disposed between the machine rotor (12) and the machine stator (14) and comprising a fluid seal stator (18) and a fluid seal rotor (20), the method comprising:
actively controlling a flow of a sealing fluid via a gap (22) between the fluid seal stator (18) and the fluid seal rotor (20) **characterized in that**;
actively controlling comprises actuating a shape memory alloy device to bias the fluid seal stator (18) away from the fluid seal rotor (20) upon supply of current to the shape memory (56) during lower operating speeds of the rotary machine (10).

## Patentansprüche

1. Rotationsmaschine (10), aufweisend:
einen Maschinenrotor (12);
einen Maschinenstator (14); und
eine zwischen dem Maschinenrotor (12) und dem Maschinenstator (14) angeordnete Fluiddichtung (16), aufweisend:
einen Fluiddichtungsstator (18) mit einem Statorelement (24), das dafür konfiguriert ist, sich axial in einem Fluiddichtungsgehäuse (26) zu bewegen,
einen Fluiddichtungsrotor (20) mit einem Rotorelement (28), das in einem Rotorgehäuse (30) angeordnet ist,
eine Feder (34), die das Statorelement (24) gegen den Fluiddichtungsrotor (28) drückt, und
einen Aktiv-Spaltsteuerungsmechanismus (44), der mit dem Fluiddichtungsstator (18) verbunden ist und dafür konfiguriert ist, einen Spalt (22) zwischen dem Fluiddichtungsstator (18) und dem Fluiddichtungsrotor (20) zu steuern, **dadurch gekennzeichnet, dass**
der Aktiv-Spaltsteuerungsmechanismus (44) eine oder mehrere Formgedächtnislegierungs-Vorrichtungen (56) aufweist, die mit dem Fluiddichtungsgehäuse (26) verbunden und dafür konfiguriert sind, das Statorelement (24) von dem Fluiddichtungsrotor (20) nach Anlegen eines Stroms an die Formgedächtnislegierungseinrichtung (56) wegzudrücken, und
dass sich, wenn die elektrische Energie weggenommen wird, das Statorelement (24) auf das Rotorelement (28) aufgrund der Federkraft zu bewegt.

2. Rotationsmaschine (10) nach Anspruch 1, die ferner eine Steuereinheit (54) zum Steuern der an die Formgedächtnislegierungs-Vorrichtung(en) (56) angelegten Strommenge aufweist, um den Spalt (22) zwischen dem Statorelement (24) und dem Fluiddichtungsrotor (20) zu steuern.

3. Rotationsmaschine (10) nach Anspruch 2, wobei der Aktiv-Spaltsteuerungsmechanismus (44) wenigstens einen mikroelektromechanischen Sensor (50) aufweist, der für die Erkennung eines Abstandes zwischen dem Fluiddichtungsrotor (20) und dem Fluiddichtungsstator (18) konfiguriert ist.

4. Verfahren zum Betreiben einer Rotationsmaschine (10), die einen Maschinenrotor (12); einen Maschinenstator (14) und eine zwischen dem Maschinenrotor (12) und dem Maschinenstator (14) angeordnete und einen Fluiddichtungsstator (18) und einen Fluiddichtungsrotor (20) aufweisende Fluiddichtung (16) aufweist, wobei das Verfahren die Schritte aufweist:
aktives Steuern eines Durchflusses eines Dichtungsfluides mittels eines Spaltes (22) zwischen dem Fluiddichtungsstator (18) und dem Fluiddichtungsrotor (20), **dadurch gekennzeichnet, dass**:
die aktive Steuerung die Betätigung einer Formgedächtnislegierungs-Vorrichtung aufweist, um den Fluiddichtungsstator (18) von dem Fluiddichtungsrotor (20) bei Anlegen eines Stroms an das Formgedächtnis (56) während niedrigeren Betriebsdrehzahlen der Rotationsmaschine (10) wegzudrücken.

## Revendications

1. Machine tournante (10), comprenant :
un rotor (12) de machine ;
un stator (14) de machine ; et
un joint (16) étanche aux fluides disposé entre le rotor (12) de machine et le stator (14) de machine ; comprenant :
un stator (18) à joint étanche aux fluides comportant un élément statorique (24) conçu pour se déplacer axialement à l'intérieur d'un logement (26) de joint étanche aux fluides,
un rotor (20) à joint étanche aux fluides comportant un élément rotorique (28) disposé à l'intérieur d'un logement (30) de rotor,
un ressort (34) poussant l'élément statorique (24) contre le rotor (28) à joint étanche aux fluides, et
un mécanisme de réglage actif (44) d'entrefer monté sur le stator (18) à joint étanche aux fluides et conçu pour régler un entrefer (22) entre le stator (18) à joint étanche aux fluides et le rotor (20) à joint étanche aux fluides, **caractérisée en ce que**
le mécanisme de réglage actif (44) d'entrefer comporte un ou plusieurs dispositifs (56) en alliage à mémoire de forme montés sur le logement (26) de joint étanche aux fluides et conçus pour écarter l'élément statorique (24) par rapport au rotor (20) à joint étanche aux fluides lorsqu'un courant est appliqué au dispositif (56) en alliage à mémoire de forme ; et
quand l'alimentation électrique est supprimée, l'élément statorique (24) se rapproche de l'élément rotorique (28) sous l'effet de la force du ressort.

2. Machine tournante (10) selon la revendication 1, comprenant en outre une unité de commande (54) pour commander la quantité de courant appliquée au(x) dispositif(s) (56) en alliage à mémoire de forme afin de régler l'entrefer (22) entre l'élément statorique (24) et le rotor (20) à joint étanche aux fluides.

3. Machine tournante (10) selon la revendication 2, dans laquelle le mécanisme de réglage actif (44) d'entrefer comporte au moins un capteur microélectromécanique (50) conçu pour détecter une distance entre le rotor (20) à joint étanche aux fluides et le stator (18) à joint étanche aux fluides.

4. Procédé pour faire fonctionner une machine tournante (10) comprenant un rotor (12) de machine, un stator (14) de machine et un joint d'étanchéité (16) pour fluide disposé entre le rotor (12) de machine et le stator (14) de machine et comportant un stator (18) à joint étanche aux fluides et un rotor (20) à joint étanche aux fluides, le procédé comprenant :
le réglage actif de débit d'un fluide d'étanchéité dans un entrefer (22) entre le stator (18) à joint étanche aux fluides et le rotor (20) à joint étanche aux fluides, **caractérisé en ce que** :
le réglage actif comporte l'actionnement d'un dispositif (56) en alliage à mémoire de forme pour écarter le stator (18) à joint étanche aux fluides par rapport au rotor (20) à joint étanche aux fluides au moment de la fourniture de courant au dispositif (56) en alliage à mémoire de forme pendant le fonctionnement de la machine tournante (10) aux régimes inférieurs.
